# EUROPÄISCHE PATENTANMELDUNG

(11) **EP 1 352 941 A1**
(43) Veröffentlichungstag der Anmeldung: **15.10.2003**
(21) Anmeldenummer: 03005895.2
(22) Anmeldetag: 17.03.2003
(51) Int. Cl.: C09K 3/18

(54) **Streumittel**

(30) Priorität: 11.04.2002 DE 20205718 U
(71) Anmelder: Reinders, Rudolf, 46459 Rees (DE)
(72) Erfinder: Reinders, Rudolf, 46459 Rees (DE)
(74) Vertreter: LOUIS, PÖHLAU, LOHRENTZ

(57) **Zusammenfassung**

Die Erfindung betrifft ein Streumittel, wobei das Streumittel ein anorganisches und/oder organisches Salz als erste Komponente und Poren oder Blasen aufweisende anorganische Partikel als zweite Komponente umfaßt, wobei die erste Komponente an der zweiten Komponente haftend aufgebracht ist.

## Beschreibung

Die Erfindung betrifft ein Streumittel.

Streumittel werden insbesondere in den kalten Jahreszeiten, in denen es zur Bildung von Eisglätte und/oder Schneefall kommt auf Fahrwegen und Gehwegen zur Verringerung der Rutschgefahr verwendet. Als Streumittel werden dabei herkömmlicherweise anorganische Salze, bspw. vergälltes Natriumchlorid, eingesetzt, welches aufgrund seiner gefrierpunktserniedrigenden Wirkung zu einem Abtauen des gefallenen Schnees bzw. von gebildetem Eis führt. Bei sehr tiefen Temperaturen kann jedoch die Gefrierpunktserniedrigung nicht ausreichen, um gebildetes Eis bzw. gefallenen Schnee abzutauen.

Des weiteren werden als Streumittel mineralische Streumittel wie bspw. Streusplitt, Sand oder Kies verwendet. Diese mineralischen Streumittel führen zu einer Abstumpfung des Untergrundes, d.h. zu einer Verringerung von Schnee- und/oder Eisglätte. Häufig werden anorganische Salze, wie bspw. das vorgenannte vergällte Natriumchlorid, zusammen mit mineralischen Streumitteln auf die Geh- und Fahrwege aufgebracht, um durch das Zusammenwirken der beiden Komponenten eine erhöhte Sicherheit zu erlangen.

Nachteilig ist, daß mineralische Streumittel, wie Streusplitt, Sand oder Kies, eine hohe Dichte aufweisen und mithin das Streugut insgesamt ein hohes Gewicht aufweist.

Das hohe Gewicht des Streumittels bzw. Streugutes ist nachteilig, da das Streumittel in der Regel mehrfach transportiert werden muß. Zum einen werden die Streumittel auf entlang von Fahr- und Gehwegen aufgestellte Sammelbehälter während der Sommermonate verteilt. Aus diesen Sammelbehältern wird dann in der kalten Jahreszeit, wenn es zur Glättebildung und/oder Schneefall kommt, das Streumittel entnommen und auf Fahr- und Gehwegen zur Verringerung der Rutschgefahr für Kraftfahrzeuge und Menschen verteilt.

Häufig steht dieses in den Sammelbehältern gelagerte Streumittel auch für die privaten Haushalte zur Verfügung. Aufgrund der hohen Dichte des Streumittels können insbesondere ältere oder körperlich schwache Menschen nur geringe Mengen an Streumitteln bspw. in einem Eimer nach Hause transportieren. Dies ist insbesondere für ältere oder körperlich schwache Menschen sehr unangenehm, da sie den Weg zwischen Wohnhaus und Sammelbehälter mehrfach zurücklegen müssen.

Auch für die Arbeiter, die die Sammelbehälter im Sommer befüllen bzw. im Winter das Streumittel mittels Streufahrzeugen auf die Fahrbahn ausbringen müssen, ist das hohe Gewicht des Streumittels eine starke körperliche Belastung. Auch erfordert die hohe Dichte des Streumittels, das als Streufahrzeuge nur Lastkraftwagen oder Streufahrzeuge mit starken Motoren in Frage kommen. Das Ausbringen eines Streumittels mit hoher Dichte auf die Fahr- und Gehwege sowie das Befüllen der Sammelbehälter führt ferner zu einem hohen Energieverbrauch bei den Transportfahrzeugen.

Aufgabe der Erfindung ist es, ein Streumittel bereitzustellen, das nicht die vorgenannten Nachteile besitzt.

Die der Erfindung zugrundeliegende Aufgabe wird durch ein Streumittel gelöst, wobei das Streumittel ein anorganisches und/oder organisches Salz als erste Komponente und Poren oder Blasen aufweisende anorganische Partikel als zweite Komponente umfaßt, wobei die erste Komponente an der zweite Komponente haftend aufgebracht ist.

Bevorzugte Weiterbildungen sind in den Unteransprüchen 2 bis 11 angegeben.

Die als zweite Komponente verwendeten Poren oder Blasen aufweisenden anorganischen Partikel haben aufgrund der Poren oder Blasen eine gegenüber massiven anorganischen Partikeln, wie bspw. Sand, Splitt etc., eine deutlich verringerte Dichte. Aufgrund der verringerten Dichte weist ein Volumen eines unter Verwendung der vorliegenden zweiten Komponente hergestellten erfindungsgemäßen Streumittels ein deutlich geringeres Gewicht auf als ein identisches Volumen eines herkömmlichen Splitt-Salz-Gemisches.

Des weiteren ist äußerst vorteilhaft, daß das als erste Komponente verwendete anorganische und/oder organische Salz an der zweiten Komponente haftend aufgebracht ist. Mithin ist eine Entmischung der zwei Komponenten nicht möglich. Die erste Komponente kann dabei auf die zweite Komponente in einer Flüssigphase, bspw. einer wässrigen Lösung, gelöst, auf die anorganischen Partikel aufgebracht werden. Nach Verflüchtigung der Flüssigphase kristallisiert das in der Flüssigphase gelöste anorganische und/oder organische Salz auf der zweiten Komponente aus.

Des weiteren dringt bei Behandlung der anorganischen Partikel mit der vorbezeichneten Flüssigphase das anorganische und/oder organische Salz in die Porenstruktur der Partikel ein und lagert sich folglich auch in den Poren oder Blasen der Partikel ab. Somit kommt es auch bei starken Erschütterungen des erfindungsgemäßen Streumittels, bspw. bei einem Transport auf einem Lastkraftwagen, nicht zu einer Trennung von Salzkomponenten, d. h. anorganischem und/oder organischem Salz, und von Trägerkomponente, d.h. der Poren oder Blasen aufweisenden anorganischen Partikel.

Nach einem Ausbringen des erfindungsgemäßen Streumittels auf Glatteis und/oder Schnee führt das auf der Oberfläche der anorganischen Partikel anhaftende anorganische und/oder organische Salz zu einem Antauen bzw. Abtauen des Eis bzw. Schnees. Die hierbei entstehende Eis/Wasser-Lösung dringt dann in die Poren oder Blasen ein und löst das in innerhalb der anorganischen Partikel abgelagerte Salz heraus. Das in den anorganischen Partikeln anhaftende Salz wird somit allmählich aus den Poren oder Blasen herausgelöst, wodurch das weitere Abtauen von Eis/Schnee auf dem Fahrweg bzw. Gehweg gefördert wird.

Gemäß einer bevorzugten Ausführungsform der Erfindung umfaßt die zweite Komponente expandierte anorganische Partikel und/oder Partikel aus Gesteinsschaum.

Solche expandierten anorganischen Partikel oder Partikel aus Gesteinsschäumen entstehen bspw. durch Erhitzung von anorganischen Partikeln unter Verwendung von Expansionsmitteln. Bspw. kann Wasser als Expansionsmittel dienen. Dieses Wasser kann als Kristallwasser in den Partikeln enthalten sein. Erhitzt man bspw. Perlite auf über 1200 °C so expandieren sie infolge der Wasserverdampfung zu einem äußerst leichten Gesteinsschaum, der ein zwanzigfaches Volumen aufweisen kann. Derartige expandierte Perlite werden auch als Puffperlite bezeichnet.

Gemäß einer weiteren bevorzugten Ausführungsform liegt der Innendurchmesser der Poren oder Blasen in einem Bereich von 0,05 cm bis etwa 0,3 cm, bevorzugt 0,1 cm bis etwa 0,2 cm.

Weiterhin ist bevorzugt, daß wenigstens 50 %, bevorzugt wenigstens 70 %, der Poren oder Blasen einen Innendurchmesser von weniger als etwa 0,2 cm, bevorzugt weniger als 0,15 cm aufweisen.

Gemäß einer weiteren bevorzugten Ausführungsform weisen die Partikel einen durchschnittlichen Außendurchmesser im Bereich von etwa 0,1 cm bis etwa 1 cm, bevorzugt von etwa 0,2 cm bis etwa 0,7 cm, noch weiter bevorzugt von etwa 0,3 cm bis 0,6 cm, auf.

Es hat sich als sehr vorteilhaft herausgestellt, wenn die anorganischen Partikel viele kleine Poren und/oder Blasen aufweisen. Hierdurch entsteht im Partikelinneren eine Art dreidimensionale Netzstruktur, die aus offenen und/oder geschlossenzelligen Poren und Blasen besteht. Im Sinn der Erfindung werden unter dem Begriff Poren auch kanalartige Strukturen verstanden, die beispielsweise durch Zusammenlagerung von mehreren Poren entstehen können.

Zum einen haftet die organische und/oder anorganische Salzkomponente zuverlässiger an den anorganischen Partikeln, wenn diese viele kleine Poren und/oder Blasen anstelle einiger weniger größerer Poren und/oder Blasen aufweisen.

Darüber hinaus hat sich gezeigt, daß anorganische Partikel, die eine solche, viele kleine Poren und/oder Blasen aufweisende, dreidimensionales Netzstruktur besitzen, eine erhöhte mechanische Stabilität haben. Da das erfindungsgemäße Streumittel nicht nur über die Wirkung der anorganischen und/oder organischen Salzkomponente, d.h. über die Gefrierpunktserniedrigung wirken, sondern auch über eine Abstumpfung eines eis- bzw. schneeglatten Untergrundes, ist es von Vorteil, wenn die Partikel nicht unter der Last von Kraftfahrzeugen zwischen abrollenden Reifen und dem Untergrund zermahlen werden. Aufgrund der engmaschigen dreidimensionalen Netzstruktur weisen die anorganischen Partikel eine äußerst hohe Stabilität auf.

Insofern können die anorganischen Partikel in der schnee- und eisfreien Zeit bspw. durch Fegen wieder eingesammelt werden und erneut mit anorganischem und/oder organischem Salz-haltiger Flüssigphase, bevorzugt wässriger Salzlösung, getränkt und nachfolgend durch Verflüchtigung der Flüssigphase wieder mit anorganischem und/oder organischem Salz beschichtet werden.

Diese mehrfache Verwendbarkeit der anorganischen Partikel sowie die äußerst einfache Aufbringung der Salzkomponente auf die anorganischen Partikel machen das erfindungsgemäße Streumittel aus ökonomischer und ökologischer Sicht sehr interessant. Bevorzugt ist, daß die zweite Komponente eine Dichte im Bereich von etwa 0,1 g/cm³ bis etwa 0,5 g/cm³, weiter bevorzugt von etwa 0,2 g/cm³ bis etwa 0,4 g/cm³, hat.

Die gegenüber herkömmlichen Streumitteln deutlich verringerte Dichte erleichtert wesentlich den Transport des erfindungsgemäßen Streumittels bei der Ausbringung auf Fahrwege bzw. Gehwege als auch beim Transport zu Bevorratungsbehältern. Des weiteren erleichtert das erfindungsgemäße Streumittel insbesondere älteren oder körperlich schwachen Menschen den Transport des Streumittels vom Supermarkt oder von einem für die Öffentlichkeit zur Verfügung stehenden Bevorratungsbehälter für Streumittel nach Hause.

Gemäß einer weiteren bevorzugten Ausführungsform wird die zweite Komponente aus der Gruppe ausgewählt, die aus Blähglas, Blählava, Blähperlite, Puffperlite, Bimsstein, expandiertes Rhyolith, expandiertes Porphyrglas und Mischungen davon besteht.

Äußerst vorteilhaft sind die vorgenannten anorganischen Partikeln in großen Mengen preiswert erhältlich. Zur Herstellung des erfindungsgemäßen Streumittels kann mithin auf die bereits im Markt erhältlichen anorganischen Partikel mit Poren und/oder Blasen zurückgegriffen werden.

Ein weiterer Vorteil der bei dem erfindungsgemäßen Streumittel verwendeten zweiten Komponente ist, daß durch die Poren und/oder Blasen eine stark unregelmäßig gebildete Oberfläche mit Vertiefungen und Erhöhungen ausgebildet ist. Diese unregelmäßig geformte Oberflächenstruktur der verwendeten anorganischen Partikel ist äußerst griffig, d.h. weist einen starken Reibungswiderstand auf. Dieser starke Reibungswiderstand verhindert zuverlässig das Rutschen von Menschen und/oder Fahrzeugen auf eisglattem und/oder schneeglattem Untergrund. Die unregelmäßig gebildete Oberflächenstruktur verhindert ein Rollen der Partikel auf einem glatten Untergrund bzw. ein Verrutschen gegenüber einem glatten Untergrund, da sich die unregelmäßig geformte Oberflächenstruktur der Partikel in der Eisoberfläche verhakt.

Gemäß einer weiteren bevorzugten Ausführungsform der Erfindung umfaßt die erste Komponente anorganische und/oder organische Salze von Alkali und/oder Erdalkalielementen sowie Mischungen derselben.

Besonders bevorzugt umfaßt die erste Komponente Natriumchlorid oder vergälltes Natriumchlorid. Natriumchlorid bzw. Steinsalz ist in großen Mengen preisgünstig erhältlich und wird mithin bevorzugt bei der vorliegenden Erfindung zur Beschichtung der anorganischen Partikel verwendet. Selbstverständlich können auch weitere anorganische Salze wie bspw. Kaliumchlorid, Kalziumchlorid, etc. verwendet werden.

Weiterhin ist bevorzugt, vergälltes Natriumchlorid zu verwenden, da dieses mit einem geringeren Steuersatz besteuert wird.

Das erfindungsgemäße Streumittel läßt sich mithin äußerst vorteilhaft zur Verringerung der Glätte eines Untergrundes verwenden. Somit eignet sich das erfindungsgemäße Streumittel äußerst vorteilhaft als Anfahrhilfe und/oder Abtaumittel auf einem Eis und/oder schneebedecktem Untergrund.

## Patentansprüche

1. Streumittel,
**dadurch gekennzeichnet,**
**daß** das Streumittel ein anorganisches und/oder organisches Salz als erste Komponente und Poren oder Blasen aufweisende anorganische Partikel als zweite Komponente umfaßt, wobei die erste Komponente an der zweiten Komponente haftend aufgebracht ist.

2. Streumittel nach Anspruch 1,
**dadurch gekennzeichnet,**
**daß** die zweite Komponente expandierte anorganische Partikel umfaßt.

3. Streumittel nach Anspruch 1 oder 2,
**dadurch gekennzeichnet,**
**daß** die zweite Komponente Partikel aus Gesteinsschaum umfaßt.

4. Streumittel nach einem der vorhergehenden Ansprüche,
**dadurch gekennzeichnet,**
**daß** der Innendurchmesser der Poren oder Blasen in einem Bereich von etwa 0,05 cm bis etwa 0,3 cm, bevorzugt etwa 0,1 cm bis etwa 0,2 cm, liegt.

5. Streumittel nach einem der vorhergehenden Ansprüche,
**dadurch gekennzeichnet,**
**daß** wenigstens 50 %, bevorzugt wenigstens 70 %, der Poren oder Blasen einen Innendurchmesser von weniger als etwa 0,2 cm, bevorzugt weniger als 0,15 cm, aufweisen.

6. Streumittel nach einem der vorhergehenden Ansprüche,
**dadurch gekennzeichnet,**
**daß** die Partikel einen durchschnittlichen Außendurchmesser im Bereich von etwa 0,1 cm bis etwa 1 cm, bevorzugt von etwa 0,2 cm bis etwa 0,7 cm, aufweisen.

7. Streumittel nach einem der vorhergehenden Ansprüche,
**dadurch gekennzeichnet,**
**daß** die Partikel einen durchschnittlichen Außendurchmesser im Bereich von etwa 0,3 cm bis etwa 0,6 cm aufweisen.

8. Streumittel nach einem der vorhergehenden Ansprüche,
**dadurch gekennzeichnet,**
**daß** die zweite Komponente eine Dichte im Bereich von etwa 0,1 g/cm³ bis etwa 0,5 g/cm³, bevorzugt etwa 0,2 g/m³ bis etwa 0,4 g/cm³, hat.

9. Streumittel nach einem der vorhergehenden Ansprüche,
**dadurch gekennzeichnet,**
**daß** die zweite Komponente aus der Gruppe ausgewählt wird, die aus Blähglas, Blählava, Blähperlite, Puffperlite, Bimsstein, expandiertes Rhyolith, expandiertes Porphyrglas und Mischungen davon besteht.

10. Streumittel nach einem der vorhergehenden Ansprüche,
**dadurch gekennzeichnet,**
**daß** die erste Komponente anorganische und/oder organische Salze von Alkali- und/oder Erdalkalielementen sowie Mischungen derselben umfaßt.

11. Streumittel nach Anspruch 10,
**dadurch gekennzeichnet,**
**daß** die erste Komponente Natriumchlorid oder vergälltes Natriumchlorid umfaßt.
